# EUROPEAN PATENT APPLICATION

(11) **EP 3 570 237 A1**
(43) Date of publication of application: **20.11.2019**
(21) Application number: 19182912.6
(22) Date of filing: 28.10.2015
(51) Int. Cl.: G06Q 20/32, G06F 21/34, G06F 21/62, G06Q 20/10, G06Q 20/34, G06Q 20/40, H04L 29/06

(54) **APPARATUS AND METHOD FOR PAYMENT USING A SECURE MODULE**

(30) Priority: 28.10.2014 KR 20140147468
(62) Divisional of application: 15191927.1
(71) Applicant: Samsung Electronics Co., Ltd., Gyeonggi-do 16677 (KR)
(72) Inventor: Jung, Eui-Chang, 16677 Suwon-si (KR); Kim, Young-Kyoo, 16677 Suwon-si (KR); Park, Su-Young, 16677 Suwon-si (KR); Yoon, Seokhyun, 16677 Suwon-si (KR); Joo, Jae-Seok, 16677 Suwon-si (KR)
(74) Representative: Nederlandsch Octrooibureau

(57) **Abstract**

An apparatus and method of registering and using financial information are provided. The method includes acquiring user information related to a user of the electronic device; authenticating the user based on the acquired user information; transmitting, to a second external device, a request to allow a first external device to receive an access right for accessing a security module included in the electronic device, based on the authentication of the user; and receiving financial information for the user from the first external device, based on the access right being granted from the second external device to the first external device.

## Description

### BACKGROUND

### 1. Field of the Invention

The present disclosure relates generally to a method and apparatus for payment using a security module.

### 2. Description of the Related Art

An electronic device capable of performing communication may include a security module (e.g., an access processor, a Subscriber Identity Module (SIM), or a Universal Integrated Circuit Card (UICC)) for user identification and communication network access of a network provider. For example, the electronic device includes a space for mounting (e.g., inserting) the security module.

By inserting the security module in the electronic device, a user can communicate with another electronic device. Further, by inserting different security modules, based on different vendor communication networks, into the electronic device, the user can access the various vendor networks using the electronic device.

Currently, payment methods using an electronic device are being implemented. However, because of potential for misuse of payments from an electronic device, there is a growing need for security measures for making payments with an electronic device.

### SUMMARY

Accordingly, an aspect of the present disclosure is to provide an electronic including a security module (i.e.., a secured storage space) in which financial information used for payment may be stored. After performing user authentication, a user accesses the financial information stored in the security module, and can perform the payment.

Another aspect of the present disclosure is to provide an electronic device and method for registering financial information using a security module included in the electronic device and for performing a payment.

Another aspect of the present disclosure is to provide an electronic device and method for performing a payment using a security module included in the electronic device.

In accordance with an aspect of the present disclosure, a payment method of an electronic device is provided. The method includes acquiring user information related to a user of the electronic device; authenticating the user based on the acquired user information; transmitting, to a second external device, a request to allow a first external device to receive an access right for accessing a security module included in the electronic device, based on the authentication of the user; and receiving financial information for the user from the first external device, based on the access right being granted from the second external device to the first external device.

In accordance with another aspect of the present disclosure, an electronic device is provided, which includes a security module; and a processor configured to acquire user information related to a user of the electronic device; authenticate the user based on the acquired user information; transmit, to a second external device, a request to allow a first external device to receive an access right for accessing a security module included in the electronic device, based on the authentication of the user; and receive financial information for the user from the first external device, based on the access right being granted from the second external device to the first external device.

In accordance with another aspect of the present disclosure, an electronic device is provided, which includes a security module; and a processor configured to receive a payment request to perform an electronic payment; select financial information for performing the electronic payment, from among one or more pieces of financial information stored via the security module, based on the payment request; acquire a user input for authenticating the selected financial information; and if the selected financial information is authenticated based on the user input, transmit the selected financial information to a first external device.

### BRIEF DESCRIPTION OF THE DRAWINGS

The above and other aspects, features and advantages of certain embodiments of the present disclosure will be more apparent from the following detailed description taken in conjunction with the accompanying drawings, in which:
FIG. 1 illustrates a network environment including an electronic device according to an embodiment of the present disclosure;
FIG. 2 illustrates an electronic device according to an embodiment of the present disclosure;
FIG. 3 illustrates a program module according to an embodiment of the present disclosure;
FIG. 4 a financial environment for an electronic device according to an embodiment of the present disclosure;
FIG. 5 illustrates a security module according to an embodiment of the present disclosure;
FIG. 6 illustrates a financial environment for an electronic device according to an embodiment of the present disclosure;
FIG. 7A and FIG. 7B are flowcharts illustrating operations for acquiring financial information according to embodiments of the present disclosure;
FIG. 8 is a flowchart illustrating an operation for transmitting financial information according to an embodiment of the present disclosure;
FIG. 9 is a flowchart illustrating an operation for using financial information according to an embodiment of the present disclosure;
FIG. 10 illustrates an example of making a payment using an electronic device according to an embodiment of the present disclosure;
FIG. 11 illustrates an example of making a payment using an electronic device according to an embodiment of the present disclosure; and
FIG. 12 is a signal flow diagram illustrating a method of installing a profile in an electronic device according to an embodiment of the present disclosure.

### DETAILED DESCRIPTION OF EMBODIMENTS OF THE DISCLOSURE

Hereinafter, various embodiments of the present disclosure will be described with reference to the accompanying drawings. In the following description, specific details such as detailed configuration and components are provided to assist the overall understanding of these embodiments of the present disclosure. Therefore, it should be apparent to those skilled in the art that various changes and modifications of the embodiments described herein can be made without departing from the scope of the present disclosure. In addition, descriptions of well-known functions and constructions are omitted for clarity and conciseness.

Although the present disclosure describes particular embodiments, as illustrated in the accompanying drawings, it should be understood that the present disclosure is not limited to the particular embodiments, but includes all modifications/changes, equivalents, and/or alternatives falling within the scope of the present disclosure.

In describing the drawings, similar reference numerals may be used to designate similar elements.

Herein, the terms "have", "may have", "include", and "may include" indicate the presence of disclosed corresponding functions, operations, elements, features, numbers, steps, operations, elements, parts, or a combination thereof described in the specifications, and do not preclude the presence or addition of one or more other features, numbers, steps, operations, elements, parts, or a combination thereof.

Further, the terms "A or B", "at least one of A or/and B" and "one or more of A or/and B" include any and all combinations of items enumerated. For example, "A or B", "at least one of A and B" and "at least one of A or B" mean (1) including at least one A, (2) including at least one B, or (3) including both at least one A and at least one B.

Although the term such as "first" and "second" may be used herein modify various elements, these terms do not limit the corresponding elements. For example, these terms do not limit an order and/or importance of the corresponding elements and may be used for the purpose of distinguishing one element from another element. For example, a first user device and a second user device may indicate different user devices. Additionally, a first element may be referred to as a second element, and similarly, a second element may be referred to as a first element.

When an element (e.g., a first element) is "connected to" or "(operatively or communicatively) coupled with/to" to another element (e.g., a second element), the first element may be directly connected or coupled to the second element, or there may be an intervening element (e.g., a third element) between the first element and the second element. However, when the first element is "directly connected" or "directly coupled" to the second element, there is no third element therebetween.

The expression "configured to (or set to)" may be replaced with "suitable for", "having the capacity to", "designed to", " adapted to", "made to", or "capable of' according to context. Further, the term "configured to (set to)" does not necessarily mean "specifically designed to" in a hardware level. For example, the expression "an apparatus configured to..." may mean that the apparatus is "capable of..." along with other devices or parts in a certain situation.

For example, "a processor configured to (set to) perform A, B, and C" may be a dedicated processor, e.g., an embedded processor, for performing a corresponding operation, or a generic-purpose processor, e.g., a Central Processing Unit (CPU) or an application processor(AP), capable of performing a corresponding operation by executing one or more software programs stored in a memory device.

Herein, the term "module" may mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, a "module" may include at least one of an Application-Specific Integrated Circuit (ASIC) chip, a Field-Programmable Gate Arrays (FPGA), and a programmable-logic device for performing operations which have been known or are to be developed hereinafter.

Herein, singular forms may include plural forms as well unless the context explicitly indicates otherwise.

Further, all the terms used herein, including technical and scientific terms, should be interpreted to have the same meanings as commonly understood by those skilled in the art to which the present disclosure pertains, and should not be interpreted to have ideal or excessively formal meanings unless explicitly defined in various embodiments of the present disclosure.

Herein, a module or program module may further include at least one or more constitutional elements among the aforementioned constitutional elements, or may omit some of them, or may further include additional other constitutional elements. Operations performed by a module, programming module, or other constitutional elements according to various embodiments of the present disclosure may be executed in a sequential, parallel, repetitive, or heuristic manner. In addition, some of the operations may be executed in a different order or may be omitted, or other operations may be added.

An example of an electronic device as described herein may include at least one of a smart phone; a tablet personal computer (PC); a mobile phone; a video phone; an e-book reader; a desktop PC; a laptop PC; a netbook computer; a workstation, a server, a personal digital assistant (PDA); a portable multimedia player (PMP); an MP3 player; a mobile medical device; a camera; or a wearable device (e.g., a head-mount-device (HMD), electronic glasses, electronic clothing, an electronic bracelet, an electronic necklace, an electronic appcessory, an electronic tattoo, a smart mirror, or a smart watch).

Another example of an electronic device as described herein may include a smart home appliance, such as a television (TV); a digital video disk (DVD) player; an audio component; a refrigerator; an air conditioner; a vacuum cleaner; an oven; a microwave oven; a washing machine; an air cleaner; a set-top box; a home automation control panel; a security control panel; a TV box (e.g., Samsung HomeSync®, Apple TV®, or Google TV); a game console(e.g., Xbox® PlayStation®); an electronic dictionary; an electronic key; a camcorder; or an electronic frame.

Another example of an electronic device as described herein may include medical equipment (e.g., a mobile medical device (e.g., a blood glucose monitoring device, a heart rate monitor, a blood pressure monitoring device, or a temperature meter), a magnetic resonance angiography (MRA) machine, a magnetic resonance imaging (MRI) machine, a computed tomography (CT) scanner, or an ultrasound machine); a navigation device; a global positioning system (GPS) receiver; an event data recorder (EDR); a flight data recorder (FDR); an in-vehicle infotainment device; an electronic equipment for a ship (e.g., ship navigation equipment and/or a gyrocompass); an avionics equipment; a security equipment; a head unit for vehicle; an industrial or home robot; an automatic teller's machine (ATM) of a financial institution, point of sale (POS) device at a retail store, or an internet of things device (e.g., a Lightbulb, various sensors, an electronic meter, a gas meter, a sprinkler, a fire alarm, a thermostat, a streetlamp, a toaster, a sporting equipment, a hot-water tank, a heater, a boiler, etc.).

Another example of an electronic device as described herein may include a piece of furniture or a building/structure; an electronic board; an electronic signature receiving device; a projector; and/or various measuring instruments (e.g., a water meter, an electricity meter, a gas meter, or a wave meter).

An electronic device according to an embodiment of the present disclosure may also include a combination of one or more of the above-mentioned devices.

Further, it will be apparent to those skilled in the art that an electronic device according to an embodiment of the present disclosure is not limited to the above-mentioned devices.

Herein, the term "user" may indicate a person who uses an electronic device or a device (e.g., an artificial intelligence electronic device) that uses the electronic device.

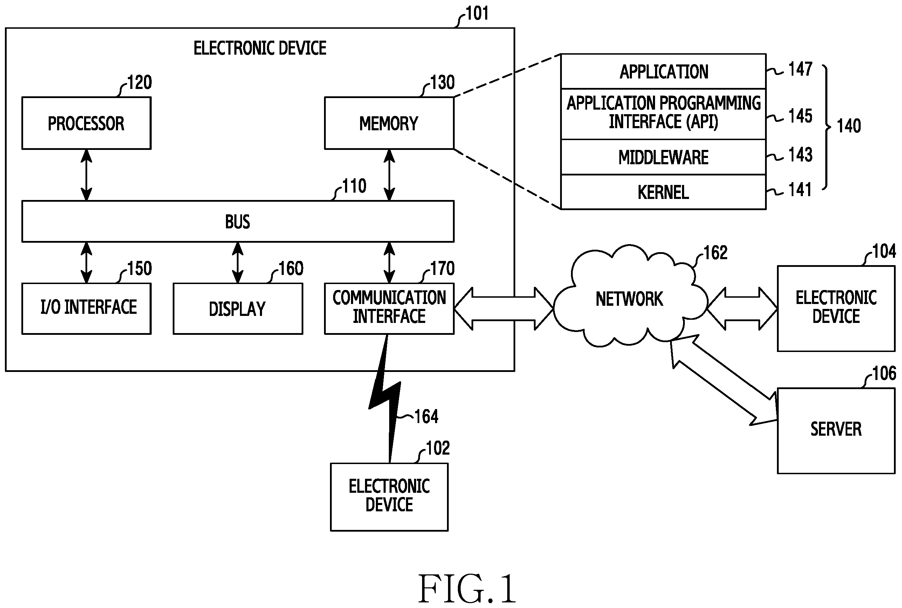

FIG. 1 illustrates a network environment including an electronic device according to an embodiment of the present disclosure.

Referring to FIG. 1, the electronic device 101 includes a bus 110, a processor 120, a memory 130, an input/output (I/O) interface 150, a display 160, and a communication interface 170. Alternatively, at least one of the components of the electronic device 101 may be omitted, or other components may be additionally included in the electronic device 101.

The bus 110 may be a circuit that connects the processor 120, the memory 130, the input/output interface 150, the display 160, and the communication interface 170, and transmits communication (for example, control messages) between the above described components.

The processor 120 may construct a web page for displaying on the display 160 using a web page document stored in the memory 130 or provided from an external device (e.g., a first external electronic device 102, a second external electronic device 104, or a server 106) through the communication interface 170. For example, the processor 120 may parse the web page document (e.g., an HyperText Markup Language (HTML) document) to create a document object model (DOM) tree for tags constructing the web page. The processor 120 may parse a style element of the web page to create a render tree. The processor 120 may control the display 160 to display the web page through rendering using the render tree.

If detecting an input for selection of at least a partial area of a web page through the input/output interface 150, the processor 120 may insert an attribute variable (e.g., a tag) for selecting and displaying, to a DOM tree for the area where the input is detected.

If detecting an input for selection of at least a partial area of a web page through the input/output interface 150, the processor 120 may control to update a render tree and display the area where the input is detected. To display the selection of a plurality of areas, the processor 120 may insert an attribute variable (e.g., a tag) for selecting and displaying, to a DOM tree for the area where the input is detected.

The processor 120 may store web page construction information (e.g., HTML information of an area where an input is detected) in a selection control module. For example, the processor 120 may store an attribute variable (e.g., a tag) for selecting and displaying and web page construction information in the selection control module. The selection control module may exist in at least one position of the internal or external of a web engine which consists of software constructing and driving a web page.

The processor 120 may extract web page construction information of at least one selected area, and construct a show page. For example, the processor 120 may search a DOM tree for an attribute variable for selecting and displaying, and identify at least one selected area.

The processor 120 may also extract the web page construction information of the at least one selected area, and create the show page. For example, the processor 120 may use the web page construction information of the at least one selected area stored in the selection control module, and create the show page. The show page may represent separate contents constructed to include at least a part of the web page construction information of the at least one area such that a user can identify the web page construction information of the at least one area selected by the user. The show page may include an electronic document including display data (e.g., image data, text data) included in at least one selected area, or a HTML-type document including HTML information (e.g., a tag or a script) included in the at least one selected area.

The processor 120 may reconstruct a web page to hide the displaying of at least one selected area on the web page displayed on the display 160.

The memory 130 may include a volatile memory and/or a non-volatile memory. For example, the memory 130 may store instructions or data (e.g., image data) relevant to at least one other element of the electronic device 101. The memory 130 stores software and/or a program 140. The program 140 includes a kernel 141, middleware 143, an Application Programming Interface (API) 145, and application programs (or "applications") 147. At least some of the kernel 141, the middleware 143, and the API 145 may be referred to as an Operating System (OS).

The kernel 141 may control or manage system resources (e.g., the bus 110, the processor 120, or the memory 130) used for performing an operation or function implemented by the other programs (e.g., the middleware 143, the API 145, or the application programs 147). Further, the kernel 141 may provide an interface through which the middleware 143, the API 145, or the application programs 147 may access the individual elements of the electronic device 101 to control or manage the system resources.

The middleware 143 may function as an intermediary for the API 145 or the application programs 147 to communicate with the kernel 141 to exchange data.

In addition, the middleware 143 may process one or more task requests received from the application programs 147 according to priorities thereof. For example, the middleware 143 may assign priorities for using the system resources (e.g., the bus 110, the processor 120, the memory 130, etc.) of the electronic device 101, to at least one of the application programs 147. For example, the middleware 143 may perform scheduling or loading balancing on the one or more task requests by processing the one or more task requests according to the priorities assigned thereto.

The API 145 is an interface through which the applications 147 control functions provided from the kernel 141 or the middleware 143, and may include, for example, at least one interface or function (e.g., instruction) for file control, window control, image processing, or text control.

The input/output interface 150 may function as an interface that may transfer instructions or data input from a user or another external device to the other element(s) of the electronic device 101. Further, the input/output interface 150 may output the instructions or data received from the other element(s) of the electronic device 101 to the user or another external device.

The display 160 may include a Liquid Crystal Display (LCD), a Light Emitting Diode (LED) display, an Organic Light Emitting Diode (OLED) display, a Micro Electro Mechanical System (MEMS) display, or an electronic paper display. The display 160 may display various types of content (e.g., text, images, videos, icons, or symbols) for the user. The display 160 may include a touch screen that receives a touch, gesture, proximity, or hovering input using an electronic pen or a user body part. For example, the display 160 may display a web page.

The communication interface 170 may set communication between the electronic device 101 and an external device (e.g., the first external electronic device 102, the second external electronic device 104, or a server 106). For example, the communication interface 170 may be connected to a network 162 through wireless or wired communication to communicate with the external device (e.g., the second external electronic device 104 or the server 106).

The wireless communication may use at least one of Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), as a cellular communication protocol. In addition, the wireless communication may include short range communication 164, such as WiFi, Bluetooth, Near Field Communication (NFC), and GPS.

The wired communication may include a Universal Serial Bus (USB), a High Definition Multimedia Interface (HDMI), Recommended Standard-232 (RS-232), and a Plain Old Telephone Service (POTS).

The network 162 may include at least one of a communication network such as a computer network (e.g., a local area network (LAN) or a wireless area network (WAN)), the Internet, and a telephone network.

Each of the first and second external electronic devices 102 and 104 may be the same type of device as the electronic device 101, or may be different.

The server 106 may include a group of one or more servers.

All or a part of operations performed in the electronic device 101 can be performed in another electronic device or multiple electronic devices (for example, the external electronic device 102 or 104 or the server 106).

When the electronic device 101 should perform some functions or services automatically or by a request, the electronic device 101 may request another device (e.g., the external electronic device 102 or 104, or the server 106) to perform at least some functions related to the functions or services instead of performing the functions or services by itself or additionally.

Another electronic device (e.g., the external electronic device 102 or 104, or the server 106) may perform a function requested by the electronic device 101 or an additional function and transfer the performed result to the electronic device 101. The electronic device 101 can provide the requested function or service to another electronic device by processing the received result as it is or additionally. For example, cloud computing, distributed computing, or client-server computing technology may be used.

The electronic device 101 may use at least one module operatively or physically separated from the processor 120 to construct a web page, and insert information about a selected area of the web page, and manage the information of the selected area.

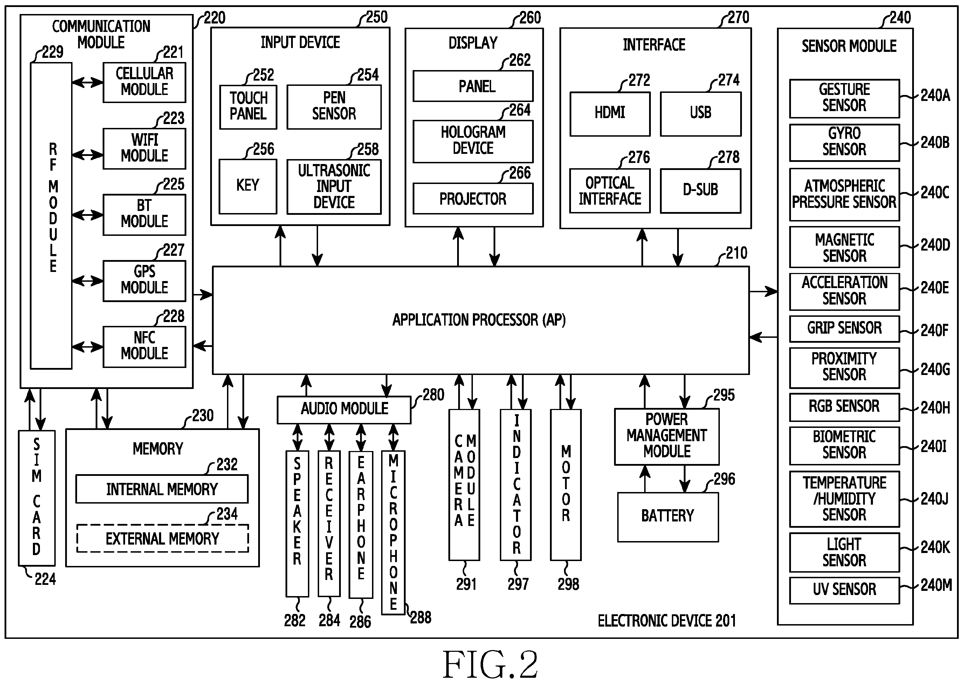

FIG. 2 illustrates an electronic device according to an embodiment of the present disclosure.

Referring to FIG. 2, the electronic device includes an Application Processor (AP) 210, a communication module 220, a SIM card 224, a memory 230, a sensor module 240, an input device 250, a display 260, an interface 270, an audio module 280, a camera module 291, a power management module 295, a battery 296, an indicator 297, and a motor 298.

The AP 210 may run an OS or an application program to control a plurality of hardware or software constituent elements connected to the AP 210, and may perform processing and operation of various data including multimedia data. For example, the AP 210 may be implemented as a System On Chip (SoC).

Alternatively, the AP 210 may also include a Graphic Processing Unit (GPU).

The communication module 220 may perform data transmission/reception in communication between the electronic device and other electronic devices connected through a network. The communication module 220 includes a cellular module 221, a WiFi module 223, a Bluetooth (BT) module 225, a GPS module 227, an NFC module 228, and a Radio Frequency (RF) module 229.

The cellular module 221 may provide voice telephony, video telephony, a text service, an Internet service, etc., through a telecommunication network (e.g., LTE, LTE-A, CDMA, WCDMA, UMTS, WiBro, GSM, etc.). Also, the cellular module 221 may use the SIM card 224 to perform electronic device distinction and authorization within the telecommunication network.

The cellular module 221 may perform at least some of functions that the AP 210 may provide. For example, the cellular module 221 may perform at least one part of a multimedia control function.

The cellular module 221 may include a Communication Processor (CP). Also, the cellular module 221 may be implemented as a SoC.

In FIG. 2, the constituent elements such as the cellular module 221, the memory 230, the power management module 295, etc., are illustrated as separate elements, but alternatively, the AP 210 may include at least some of the aforementioned elements (e.g., the cellular module 321).

The AP 210 or the cellular module 221 may load an instruction or data, which is received from a non-volatile memory connected to each or at least one of other constituent elements, to a volatile memory and process the loaded instruction or data. Also, the AP 210 or the cellular module 221 may store, in the non-volatile memory, data received from at least one of the other constituent elements or generated by at least one of the other constituent elements.

The WiFi module 223, the BT module 225, the GPS module 227 and/or the NFC module 228 may include a processor for processing data transmitted/received through the corresponding module.

In FIG. 2, although the cellular module 221, the WiFi module 223, the BT module 225, the GPS module 227 and the NFC module 228 are illustrated as separate blocks, alternatively, at least some (e.g., two or more) of the cellular module 221, the WiFi module 223, the BT module 225, the GPS module 227 and/or the NFC module 228 may be included within one integrated circuit (IC) or IC package. For example, at least someof processors corresponding to the cellular module 221, the WiFi module 223, the BT module 225, the GPS module 227 and/or the NFC module 228 may be implemented as one SoC.

The RF module 229 may perform transmission/reception of data, e.g., transmission/reception of an RF signal. For example, the RF module 229 may include a transceiver, a Power Amplifier Module (PAM), a frequency filter, and/or a Low Noise Amplifier (LNA). The RF module 229 may also include a component for transmitting/receiving an electromagnetic wave on a free space in wireless communication, for example, a conductor or a conductive wire.

Although FIG. 2 illustrates the cellular module 221, the WiFi module 223, the BT module 225, the GPS module 227 and the NFC module 228 sharing the RF module 229, alternatively, at least one of the cellular module 221, the WiFi module 223, the BT module 225, the GPS module 227 and/or the NFC module 228 may perform transmission/reception of an RF signal through a separate RF module.

The RF module 229 may include a main antenna and a sub antenna which are operatively connected with the electronic device. The communication module 220 may use the main antenna and the sub antenna to support a Multiple Input Multiple Output (MIMO) type diversity, etc.

The SIM card 224 may be inserted into a slot provided at a specific position in the electronic device. The SIM card 224 may include unique identification information (e.g., an Integrated Circuit Card ID (ICCID)) or subscriber information (e.g., an International Mobile Subscriber Identity (IMSI)).

The memory 230 includes an internal memory 232 and an external memory 234. For example, the internal memory 232 includes volatile memory (e.g., a Dynamic Random Access Memory (DRAM), a Static RAM (SRAM) and a Synchronous Dynamic RAM (SDRAM)) and/or a non-volatile memory (e.g., a One-Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a Not AND (NAND) flash memory, and a Not OR (NOR) flash memory).

The internal memory 332 may be a Solid State Drive (SSD).

The external memory 334 may further include a flash drive, for example, Compact Flash (CF), Secure Digital (SD), micro-SD, mini-SD, extreme Digital (xD), a memory stick, etc. The external memory 334 may be operatively connected with the electronic device through various interfaces. The electronic device may further include a storage device (or a storage media) such as a hard drive.

The sensor module 240 may measure a physical quantity or sense an activation state of the electronic device, and convert measured or sensed information into an electrical signal. The sensor module 340 includes a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, Blue (RGB) sensor 240H, a biometric sensor 240I, a temperature/humidity sensor 240J, a light sensor 240K, and an Ultraviolet (UV) sensor 240M. Additionally or alternatively, the sensor module 240 may include an E-nose sensor, an Electromyography (EMG) sensor, an Electroencephalogram (EEG) sensor, an Electrocardiogram (ECG) sensor, an Infrared (IR) sensor, an iris sensor, and/or a fingerprint sensor. The sensor module 340 may also include a control circuit for controlling at least one or more sensors included therein.

The input device 250 includes a touch panel 252, a (digital) pen sensor 254, a key 256, and an ultrasonic input device 258. The touch panel 252 may detect a touch input in at least one of a capacitive overlay scheme, a pressure sensitive scheme, an infrared beam scheme, or an acoustic wave scheme. Also, the touch panel 252 may further include a control circuit. When using a capacitive overlay scheme, physical contact or proximity detection is possible. The touch panel 252 may further include a tactile layer, to provide a tactile response to a user.

The (digital) pen sensor 254 may be implemented in the same or similar method to receiving a user's touch input or by using a separate sheet for detection.

The key 256 may include a physical button, an optical key, or a keypad.

The ultrasonic input device 258 is a device capable of identifying data by sensing a sound wave in the electronic device through an input tool generating an ultrasonic signal, and enables wireless detection.

The electronic device may also use the communication module 220 to receive a user input from an external device (e.g., a computer or a server).

The display 260 includes a panel 262, a hologram device 264, and a projector 266. For example, the panel 262 may be a Liquid Crystal Display (LCD) or an Active-Matrix Organic Light-Emitting Diode (AMOLED). The panel 262 may be flexible, transparent, or wearable. The panel 262 may be constructed as one module with the touch panel 2521.

The hologram device 264 may use interference of light to show a three-dimensional image in the air.

The projector 266 may project light to a screen to display an image. The screen may be, for example, located inside or outside the electronic device.

The display 260 may also include a control circuit for controlling the panel 262, the hologram device 264, and/or the projector 266.

The interface 270 includes an HDMI 272, a USB 274, an optical interface 276, and a D-subminiature (D-sub) 278. Additionally or alternatively, the interface 370 may include a Mobile High-definition Link (MHL) interface, a Secure Digital (SD) card/Multi Media Card (MMC) interface, and/or an Infrared Data Association (IrDA) standard interface.

The audio module 280 may convert a voice and an electric signal interactively. The audio module 280 may process sound information which is inputted or outputted through a speaker 282, a receiver 284, an earphone 286, and/or the microphone 288.

The camera module 291 takes still pictures and video. The camera module 291 may include one or more image sensors (e.g., a front sensor or a rear sensor), a lens, an Image Signal Processor (ISP), and/or a flash (e.g., an LED or a xenon lamp).

The power management module 295 may manage power of the electronic device. For example, the power management module 295 may include a Power Management Integrated Circuit (PMIC), a charger IC, and/or a battery gauge.

The PMIC may be mounted within an integrated circuit or a SoC semiconductor.

A charging scheme may be divided into a wired charging scheme and a wireless charging scheme. The charger IC may charge the battery 296, and may prevent the inflow of overvoltage or over-current from an electric charger. The charger IC may include a charger IC for the wired charging scheme or the wireless charging scheme. For example, the wireless charging scheme may be a magnetic resonance scheme, a magnetic induction scheme, an electromagnetic wave scheme, etc. A supplementary circuit for wireless charging, for example, a circuit such as a coil loop, a resonance circuit, or a rectifier may also be added.

The battery gauge may measure a level of the battery 296, a voltage during charging, a current, or a temperature. The battery 296 may generate or store electricity, and use the stored or generated electricity to supply power to the electronic device. The battery 296 may include a rechargeable battery or a solar battery.

The indicator 297 may display a specific status of the electronic device or one part (e.g., the AP 210) thereof, for example a booting state, a message state, a charging state, etc.

The motor 298 may convert an electric signal into a mechanical vibration.

The electronic device may include a processing device (e.g., a GPU) for mobile TV support. The processing device for mobile TV support may process media data according to the standards of Digital Multimedia Broadcasting (DMB), Digital Video Broadcasting (DVB), or a media flow.

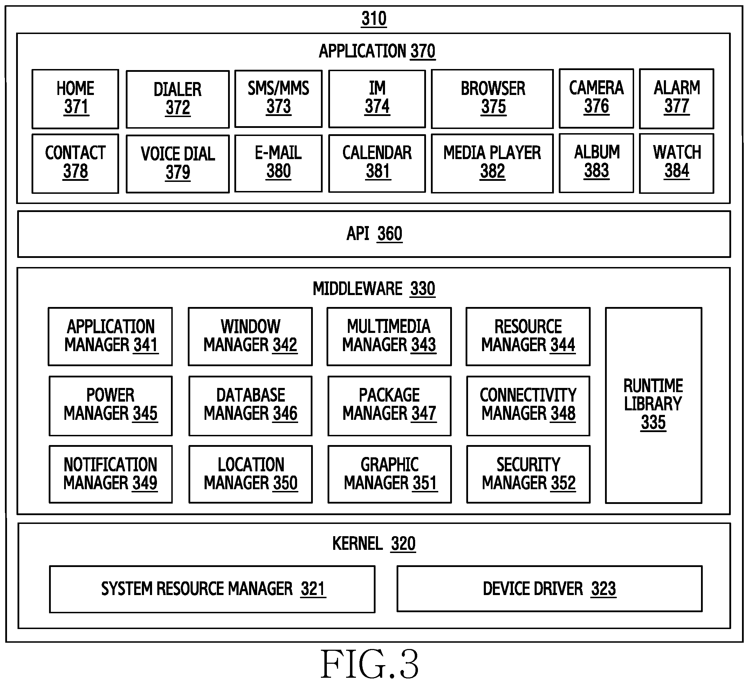

FIG. 3 illustrates a program module according to an embodiment of the present disclosure.

Referring to FIG. 3, the program module 310 includes an OS for controlling resources associated with an electronic apparatus and/or various applications running on the OS. For example, the operating system may be Android®, iOS®, Windows®, Symbian®, Tizen®, Bada®, etc.

The programming module 310 includes a kernel 320, middleware 330, an API 360, and an application 370. At least a part of the program module 310 can be preloaded on the electronic device or downloaded from the server.

The kernel 320 includes a system resource manager 321 and a device driver 323. The system resource manager 321 may control, allocate, or collect the system resources. The system resource manager 321 may include a process management unit, a memory management unit, or a file system management unit. The device driver 323 may include a display driver, a camera driver, a Bluetooth driver, a shared-memory driver, a USB driver, a keypad driver, a Wi-Fi driver, an audio driver, or an InterProcess Communication (IPC) driver. A WIFI driver of the kernel 320 may control at least one of an antenna mode or a transmission period of a network control message for use to transmit and receive signals to and from a communication interface.

The middleware 330 may provide a function for the applications 370 in common or provide various functions to the applications 370 through the API 360, such that the applications 370 can efficiently use limited system resources within the electronic device. The middleware 330 includes a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses to add new functions through a programming language while the application 370 is executed. The run time library 335 may perform input/output management, memory management, or a function for an arithmetic function.

The application manager 341 may manage a life cycle of at least one of the applications 370.

The window manager 342 may manage Graphical User Interface (GUI) resources used by a screen.

The multimedia manager 343 may grasp formats required for the reproduction of various media files, and may perform an encoding or decoding of the media file by using a codec suitable for the corresponding format.

The resource manager 344 may manage resources such as a source code, a memory, and a storage space of at least one of the applications 370.

The power manager 345 may operate together with a Basic Input/Output System (BIOS) to manage a battery or power and may provide power information required for the operation of the electronic device.

The database manager 346 may generate, search for, or change a database to be used by at least one of the applications 370.

The package manager 347 may manage the installation or the updating of applications distributed in the form of package file.

The connectivity manager 348 may manage wireless connection of, for example, Wi-Fi or Bluetooth.

The notification manager 349 can display or notify of an event such as an arrival message, promise, proximity notification, etc., in such a way that does not disturb a user.

The location manager 350 may manage location information of the electronic device.

The graphic manager 351 may manage graphic effects to be provided to a user and user interfaces related to the graphic effects.

The security manager 352 may provide all security functions required for system security or user authentication.

The middleware 330 may control at least one of the transmission period of an antenna mode or a transmission period of a network control message for use to transmit and receive signals to and from a communication interface by using at least one manager.

According to an embodiment, when the electronic device has a call function, the middleware 330 may further include a telephony manager for managing a voice call function or a video call function of the electronic device.

The middleware 330 may include a middleware module for forming a combination of various functions of the aforementioned components. The middleware 330 may provide modules specialized according to types of OSs in order to provide differentiated functions. Further, the middleware 330 may dynamically remove some of the existing components or add new components.

The API 360 includes a set of API programming functions, and a different configuration thereof may be provided according to an OS. For example, one API set may be provided when using Android® or iOS®, and two or more API sets may be provided when using Tizen®.

The applications 370 include home 371, dialer 372, short messaging service/multimedia messaging service (SMS/MMS) 373, Instant Message (IM) 374, browser 375, camera 376, alarm 377, contacts 378, voice dialer 379, email 380, calendar 381, media player 382, album 383, watch 384. Additionally, the applications 370 may include other applications, such as applications for health care (e.g., heart monitor or blood sugar monitor), or environment information (e.g., atmospheric pressure, humidity, or temperature information).

The applications 370 may include an application (hereinafter, "Information Exchange application") that supports the exchange of information between an electronic device and an external electronic device. The application associated with exchanging information may include a notification relay application for notifying an external electronic device of certain information or a device management application for managing an external electronic device.

For example, a notification relay application may include a function of transferring the notification information generated by other applications of the electronic device to the external electronic device.

Further, the notification relay application may receive notification information from the external electronic device and provide the received notification information to the user. For example, the device management application may manage (e.g., install, delete, or update) at least one function (e.g., turning on/off the external electronic device itself (or some elements thereof) or adjusting the brightness (or resolution) of a display) of the external electronic device communicating with the electronic device, applications operating in the external electronic device, or services (e.g., a telephone call service or a message service) provided from the external electronic device.

The applications 370 may include an application specified according to an attribute of the external electronic device. The applications 370 may include an application received from the external electronic device.

The applications 370 may include a preloaded application or a third party application which can be downloaded from a server. The names of the elements of the program module 310 illustrated in FIG. 3 may vary according to the type of OS.

At least a part of the programming module 310 may be implemented in software, firmware, hardware, or a combination of two or more thereof.

At least a part of the program module 310 can be implemented (e.g., executed), by a processor.

The programming module 310 may also include a module, program, routine, sets of instructions, or process for performing one or more functions.

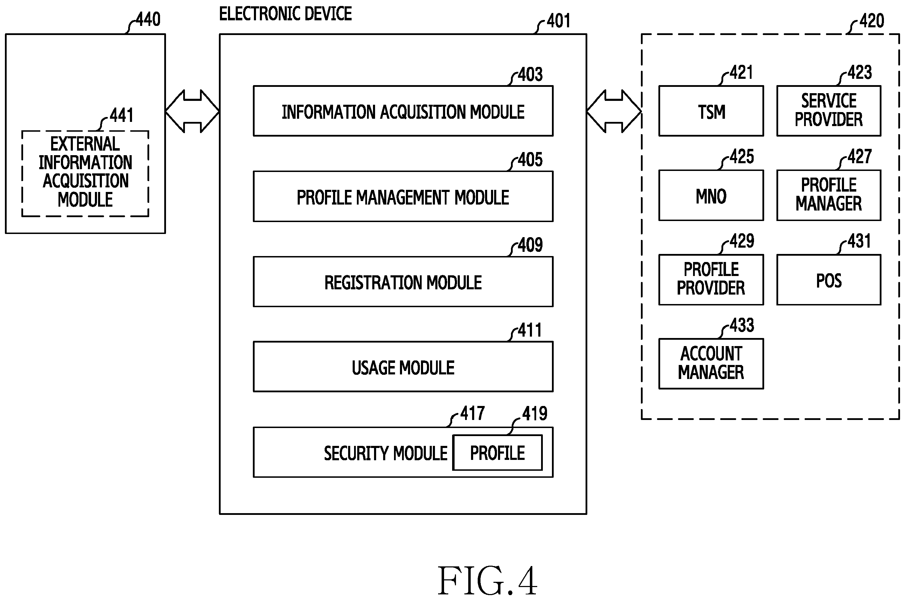

FIG. 4 illustrates a financial environment for an electronic device according to an embodiment of the present disclosure.

Referring to FIG. 4, the electronic device 401 communicates with a financial system 420 and an external device 440 in a wired or wireless fashion in order to receive information for use in a financial payment from at least one of the financial system 420 and the external device 440.

In addition, the electronic device 401 may transmit/receive financial information related to the financial payment to/from at least one of the financial system 420 and the external device 440. Accordingly, the electronic device 401 includes an information acquisition module 403, a profile management module 405, a registration module 409, a usage module 411, and a security module 417.

The information acquisition module 403 may acquire at least one piece of information among a user's bio information (e.g., a user's fingerprint, pulse, heart rate, blood flow rate, blood sugar level, unique ID, hash value, etc., for expressing the bio information), user information (e.g., a user name, an address, a birthday, a resident registration number, an answer to a question for checking individuals, a unique ID issued temporarily or permanently for the electronic device 401 by a server, an account ID, etc.), financial information (e.g., credit card information, bank account information, check card information associated with the bank account, account information including the variety of financial information, etc.), a payment request (e.g., payment information including product information acquired via a camera, product information received through communication, etc.).

For example, the information acquisition module 403 may acquire the aforementioned information, from the financial system 420 or the external device 440, by using at least one of various input devices (e.g., the display 260, the sensor module 240, the audio module 280, etc.) included in the electronic device 401.

The information acquisition module 403 may acquire information from a different electronic device through wired or wireless communication (e.g., acquire the information from a different user or from an external device) or may acquire the information through a user input. The information acquisition module 403 may acquire a Uniform/Universal Resource Locator (URL), which may be used to receive the payment request information from a network that provides the payment request information.

The information acquisition module 403 may receive from the external device 440 the at least one piece of information acquired via an external information acquisition module 441 included in the external device 440. For example, the information acquisition module 403 may receive information (e.g., bio information, user information, financial information, payment request information, etc.) acquired by the external information acquisition module 441 via the display 260, the sensor module 240, the audio module 280, etc., included in the electronic device 401, through communication with the external device 440.

The information acquisition module 403 may transmit the at least one piece of information to the financial system 420 via a communication module of the electronic device 401. For example, the information acquisition module 403 may transmit the user information or the bio information to a Trusted Service Manager (TSM) 421 in the financial system 420 for the information to be used for user authentication. The information acquisition module 403 may transmit the financial information or payment request information to a Point Of Sales (POS) 431 or a service provider 423.

The profile management module 405 may manage a profile 419 of the electronic device 401, or the profile management module 405 may interwork with the financial system 420 to manage the profile 419 of the electronic device 401. For example, the profile management module 405 may communicate with the financial system 420 (e.g., a profile manager 427, a profile provider 429, or a Mobile Network Operation (MNO) 425), and install, delete, enable, or disable the profile 419 included in the security module 417 of the electronic device 401 under the control of the financial system 420.

The financial system 420 may provide a function of the profile management module 405 to the electronic device 401 in the form of an application.

The profile 419 may store subscription information based on an agreement between a network provider and a user, user information and bio information related to the subscription, a key value for authentication when connected to a network, or information for using various additional services provided by the network provider (e.g., an additional service providing application, installation information of the application, user information related to the provided service, etc.).

The electronic device 401 may register financial information to the security module 417, via the registration module 409. The registration module 409 may acquire user information for verifying a user's identity. By authenticating the user information, the registration module 409 may register the financial information to the security module 417 via the financial system 420. The registration module 409 may authenticate the user by comparing the user information with user information pre-registered in the electronic device.

The registration module 409 may deliver authentication information (e.g., an authentication result for the user) or financial information (e.g., financial information which is input by the user) to the financial system 420 (e.g., the service provider 423) through wireless or wired communication. The registration module 409 may request the financial system 420 to register the financial information, and in response, the financial system 420 registers the financial information to the electronic device 401.

The registration module 409 may authenticate the user based on a user input or user information acquired, for example, via the information acquisition module 403. For example, for the authentication, the user may store user information in a security area (e.g., the security module 417) of the electronic device 401 or the financial system 420 (e.g., the service provider 423 or the TSM 421). The registration module 409 may then compare the acquired user information with pre-stored user information in order to authenticate the user. For example, if the acquired user information matches the pre-stored user information, the registration module 409 may authenticate the user.

The registration module 409 may compare the information by receiving the pre-stored user information from the external device 440.

The registration module 409 may transmit the acquired user information to the financial system 420 (e.g., the TSM 421) so that the financial system 420 can authenticate the user information. The registration module 409 may then receive an authentication result obtained by the financial system 420 comparing the user information acquired from the external device 440 and the pre-stored user information. The registration module 409 may modify data so that the electronic device 401 can transmit (e.g., in a form of a message) the user authentication information (e.g., whether the authentication is successful) to the financial system 420.

The registration module 409 may transmit a request to at least one second external device for the electronic device 401, based on the authentication result, in order for an access right to access the security module 417 to be received from a first external device for the electronic device 401. For example, the registration module 409 may deliver the request to the second external device (e.g., the TSM 421), based on the authentication result, in order for the first external device (e.g., the service provider 423) to acquire the access right.

The second external device may confirm the user authentication in response to the request of the registration module 409 (e.g., receive the authentication result from the registration module 409), and deliver a temporary access right to the first external device so that the first external device can access at least one part of the security module 417. In this case, the first external device and the second external device may be connected to each other via a server network and may exchange information via the server network.

The registration module 409 may provide wired or wireless communication so that the first external device can access at least one part of the security module through the temporary access right acquired from the second external device. For example, the electronic device 401 may receive financial information or an access right for at least one part of the security module 417 from the first external device via the registration module 409. The access right may be used by the first external device to access the financial information.

The financial information may be financial information (e.g., financial information based on a user account) delivered by the electronic device 401 to the first external device. For example, the electronic device 401 may deliver financial information acquired from an input device (e.g., financial information acquired from the user) to the first external device. The electronic device 401 may receive the financial information from the security module 417 via the registration module 409 and the first external device.

The usage module 411 may perform a payment based on the financial information stored in the security module 417, e.g., in response to a payment request acquired via the information acquisition module 403. The usage module 411 may select at least one piece of financial information to be used in the payment, based on the payment request information acquired from the information acquisition module 403. The usage module 411 may authenticate a user for the selected financial information, and perform the payment by transmitting the financial information to the financial system 420 based on the authentication.

The electronic device 401 (e.g., the usage module 411 therein) may acquire a payment request for a product, service, etc., to be paid by the user with the electronic device, via the information acquisition module 403. The payment information may include a price of a product to be paid, a payment place (e.g., a settlement place), a payment method, etc.

The information acquisition module 403 may acquire the payment request via input devices of the electronic device 401. For example, the information acquisition module 403 may acquire the payment request via a display, a sensor module, a camera module, a communication module, or an audio module.

The usage module 411 may select at least one piece of financial information stored in the security module 417 of the electronic device 401. For example, if multiple pieces of financial information are stored in the electronic device 401, the usage module 411 may select financial information to be used in the payment based on the payment request acquired via the information acquisition module 403.

If the pieces of financial information are stored separately in a plurality of profiles, the usage module 411 may select the financial information by using various methods. For example, the usage module 411 may automatically select the financial information by referring to a payment history using the financial information (e.g., a place, a price, a payment place, a time, a profile in use, etc.) or information related to an account currently being used by the user (e.g., an application, a network service account, etc.).

The usage module 411 may select financial information of a second profile (e.g., a profile currently being disabled) based on ta user selection, instead of selecting financial information included in a first profile (e.g., a profile currently enabled). For example, in order to use the financial information via a processor (e.g., the profile manager 427), the usage module 411 may select the financial information of the second profile by disabling the first profile and by enabling the second profile.

The usage module 411 may share (e.g., copy, move, etc.) financial information of the second profile with respect to the first profile by using a common storage space of the security module 417. For example, the usage module 411 may access the financial information of the second profile, and select the financial information as financial information to be used in the payment by temporarily copying or moving the financial information to the common storage space without an enabling/disabling operation of the profile.

The usage module 411 may install the financial information of the second profile to the first profile. For example, the usage module 411 may deliver a financial information installation request to the financial system 420 (e.g., the MNO 425, the profile manager 427, or the profile provider 429 therein) via the usage module 411, and install financial information of the disabled profile to an enabled profile via an external device 440.

Installing the financial information may be performed by a processor (e.g., the profile management module 405) of the electronic device 401, without intervention of the financial system 420. As another example, the processor may perform the installation operation by receiving a right from the financial system 420.

The usage module 411 may allocate (e.g., distribute or transmit) the payment request acquired from the information acquisition module 403 to a different electronic device based on a user input. For example, the usage module 411 may deliver the payment request to at least one other electronic device based on the user input or a configuration pre-stored in the electronic device 401. In this case, the other electronic device may deliver at least one piece of financial information (e.g., second financial information), to the electronic device 401, based on the distributed payment request.

The other electronic device may deliver the second financial information, authentication information related to the second financial information, or user information to the usage module 411. The usage module 411 may perform the payment by delivering the acquired second financial information, authentication information, and user information to the financial system 420.

The other electronic device may directly perform the payment based on the payment request. For example, the other electronic device may transmit financial information stored therein to the financial system 420 (e.g., the POS 431 therein) based on the payment request, in order to perform the payment via a payment server.

The usage module 411 may authenticate a user corresponding to the selected financial information via the user or the electronic device 401 in response to the payment request. For example, when authenticating user information acquired via the information acquisition module 403, the usage module 411 may authenticate whether the selected financial information is for the user.

The usage module 411 may transmit, to the MNO 425, a payment response to the payment request. The MNO 425 may make the payment instead of the electronic device 401, and thereafter, charge a user of the electronic device 401for the previous payment. For example, the MNO 425 may make the payment to a payment place (e.g., a store, a shop, etc.) via a pre-agreed payment server or payment system, in response to the request transmitted by the electronic device 401 and thereafter, charge the user of the electronic device 401 a fee (e.g., a network usage fee) to reimburse the MNO 425 for the previous payment.

The security module 417 may include a SIM, universal SIM, or a UICC. The SIM or the UICC may store subscriber information related to a network, network provider information (e.g., embedded universal integrated circuit card ID, PLMN ID, URL information, etc.), or user information. The SIM or the UICC may be included (e.g., mounted or embedded) in the electronic device 401.

Because the security module 417 is included (e.g., mounted or embedded) in the electronic device 401, a user cannot arbitrarily separate it from the electronic device 401. For example, the security module 417 may be mounted on a Printed Circuit Board (PCB) with other components during the manufacturing of the electronic device 401, so that it is not easily detached by the user.

The security module 417 may also exist in at least one part of a memory included in the electronic device 401. For example, the security module 417 may be implemented in the memory in a form of a program, an application, etc.

The security module 417 may include a designated security area (e.g., a specific area physically or logically divided) for storing important information (e.g., information that can be shared with an external element under a specific condition, such as user's bio information, financial information, etc.) requiring the security.

The security module 417 may include one or more profiles 419. For example, one user may use a plurality of networks (e.g., a first communication network supported by a first communication vendor and a second communication network supported by a second communication vendor) via the electronic device 401. In this case, the security module 417 may have the plurality of profiles corresponding to the plurality of networks.

The financial system 420 includes the TSM 421, the service provider 423, the MNO 425, the profile manager 427, the profile provider 429, the POS 431, and an account manager 433. Although FIG. 4 illustrates the financial system 420 including all of the aforementioned constitutional elements for convenience of explanation, at least some of the constitutional elements may be located outside the financial system 420. For example, the profile manager 427 or the profile provider 429 may also be located outside of the financial system 420.

Additionally, at least one of the TSM 421, the service provider 423, the MNO 425, the profile manager 427, the profile provider 429, the POS 431, and the account manager 433 of the financial system 420 may be configured to operate as at least one system. For example, the financial system 420 may be configured to include a first financial system including the MNO 425, a second financial system including the TSM 421, the service provider 423, the account manager 433, and the POS 431, and a 3^{rd} financial system including the profile manager 427 and the profile provider 429.

Additionally, the TSM 421, the service provider 423, the MNO 425, the profile manager 427, the profile provider 429, the POS 431, and the account manager 433 may be included in one electronic device or included in a divided manner in two or more electronic devices.

Further, the at least one system may consist of a plurality of systems managed by a plurality of entities. For example, the 3^{rd} financial system may exist as a 4^{th} financial system managed by a manufacturer of the electronic device 401, a 5^{th} financial system managed by the MNO 425, or a 6^{th} financial system managed by a manufacturer of the security module 417.

The TSM 421 may relay transmission of security-sensitive information for handling the security-sensitive information (e.g., bio information, user information, financial information, etc.), which is not shared with another user, among various devices. For example, when the electronic device 401 transmits financial information to the financial system 420, the TSM 421 may determine whether to deliver the financial information based on whether the financial system 420 (e.g., the service provider 423) is a normally authenticated service provider (e.g., whether it is not an illegal service provider who provides service in an abnormal way, such as hacking or the like).

The TSM 421 may restrict an unauthorized electronic device from receiving financial information transmitted by the electronic device 401. The TSM 421 may report content related to the restriction to a sender of the financial information (e.g., the electronic device 401). For example, the TSM 421 may transmit information regarding the unauthorized electronic device or a restriction cause or the like to the electronic device 401.

The TSM 421 may exchange security information with one or more electronic devices (e.g., the electronic device 401 or the external device 440). For example, when the electronic device 401 performs a payment for a product or a service, the TSM 421 may function as a third-party entity by relaying a variety of information between service devices (e.g., the service provider 423 or a server provided by various service vendors including a financial institution, an MNO, a terminal manufacturer, a security module manufacturer, or a credit card company.

For example, the TSM 421 may store and deliver security information as an intermediary point of at least one external service provider (e.g., the service provider 423, a service device (e.g., a payment server) provided by a credit card company or a bank, a network provider's server provided by a network provider, etc.). The TSM 421 may authenticate or confirm a user by acquiring user information associated with the external service provider's server (e.g., the service provider 423, etc.) and the electronic device 401.

For example, the TSM 421 may receive security information (e.g., user information, account information, and bio information) for authenticating the user of the electronic device 401 or the at least one external service provider from the user and may store the security information in a secure storage space (e.g., a storage space limited as an object having a specific access right). The security information may be used to authenticate the user when the electronic device 401 performs a payment or registers financial information.

In addition to the user for the electronic device 401, the TSM 421 may confirm whether the at least one external service provider is an authorized service provider. For example, when the financial information provided for the payment from the user is transmitted to the credit card server, the TSM 421 may confirm whether the credit card server is a normally authenticated service provider (e.g., not having a security problem caused by hacking).

The TSM 421 may be embodied as a server or a system.

The TSM 421 may manage authentication information of various external service providers or access rights for accessing the security information.

The TSM 421 may include a Wallet Management System (WMS) including a wallet client manager, an application widget manager, a user, a device (e.g., the electronic device 401) manager, a profile (e.g., the profile 419) manager, a data manager, and a policy module.

The wallet client manager may manage a wallet application including individual widgets (e.g., widgets of an application related to a financial institute, an account, etc.). The wallet client manager may store a wallet application type or application related information including a service provider.

For example, if the electronic device 401 owned by the user has a mobile wallet application created by a specific service provider, the wallet client manager may recognize that the electronic device 401 has a specific function set related to the user and the specific service provider. For example, the wallet client manager may recognize that the electronic device 401 has a specialized function related to the user and the specific service provider.

In the WMS, the widget manager may manage widgets stored in the wallet application. The widgets are applications configured for a user interface of the electronic device 401. For example, the widgets may include a payment application, a traffic application, and other related applications.

The user and the device profile manager may include a memory for storing one or more programs capable of managing an application or other related information. In addition, the user and the device profile manager may store information regarding the electronic device 401, including a type of the electronic device 401, a supported OS, a service provider, and other related information.

In the WMS, the data manager may manage information regarding a data management service provided by a mobile WMS (e.g., regarding providing of a payment history, storing and providing of a user configuration, providing of a royalty program, a digital receipt, a digital coupon, etc.). In the WMS, a policy module may filter widgets based on information regarding the electronic device.

For example, among the widgets, a widget which violates or has a possibility of violating a mobile wallet usage rule may be filtered out.

The aforementioned constitutional elements of the WMS may exist inside or outside the WMS and may be operatively coupled thereto. The WMS may be included in the TSM 421 or may exist outside thereof as a separate entity.

The service provider 423 may include a device or server provided by an institute or company which provides a specific service. For example, the service provider 423 may include a credit card vendor, a security module manufacturer, an electronic device manufacturer, a payment service provider, a financial service provider, etc.

The service provider 423 may provide information, function, and data related to a service to be provided, e.g., in the form of an application, in order to be effectively managed and used by the user of the electronic device 401. For example, the electronic device 401 may receive credit card information from the credit card vendor and store the information in a secure storage space (e.g., the security module 417 or a security storage space of a device or server provided by the financial system 420), and may receive a function to be used from the credit card vendor in the form of an application.

The electronic device 401 may control or use various functions thereof, which are related to an input or usage of financial information, by installing the application. For example, the application may receive a user input and may be involved in delivering of information between the electronic device 401 and the financial system 420 in association with the processor 405 and encrypting important information (e.g., user information, financial information, etc.).

The application may be involved in registering financial information to the security module 417 via the registration module 409 of the electronic device 401 and financial system 420.

The application may be involved in using the financial information of the security module 417 in a payment via the usage module 411 of the electronic device 401 and the financial system 420.

The MNO 425 may include a module or server managed by a network vendor, i.e., company, that provides a mobile communication network.

The MNO 425 may be managed separately for each of the vendors, or may be managed as one MNO 425 by a community of network vendors for convenience of the vendors. For example, the vendors may respectively manage an MNO of a vendor A, an MNO of a vendor B, and an MNO of a vendor C. Alternatively, the vendors may cooperatively manage MNO servers of the vendors A, B, and C.

The MNO 425 may be configured together with the profile provider 429 or the profile manager 427, or may be configured independently of the profile provider 429 and the profile manager 427. For example, the MNO 425 may include a profile provider of the vendor A or a profile manager of the vendor A as the MNO of the vendor A, or may include one of the profile provider of the vendor A and the profile manager of the vendor A.

The MNO 425 may also include profile providers of the vendors A, B, and C and profile managers of the vendors A, B, and C as the MNOs of the vendors A, B, and C, or may include one of the profile providers of the vendors A, B, and C and profile managers of the vendors A, B, and C.

The MNO 425 may be configured to include a function of the TSM 421. For example, the MNO 425 may include at least one part (e.g., a wallet management system, etc.) of the functionality of the TSM 421.

The profile provider 429 may provide a profile to be installed in the at least one profile 419 based on a profile providing request related to a usage agreement between the electronic device 401 and the MNO 425. For example, when the electronic device 401 subscribes to the MNO 425 (e.g., subscribes to an agreement for using a network in the future with a network provider), the MNO 425 may deliver, to the profile provider 429, Universal Subscriber Identity Module (USIM) information such as an IMSI and a key value for accessing the profile 419 .

The IMSI is a subscriber identity number, and the subscriber identity number may include a Mobile Country Code (MCC), a Mobile Network Code (MNC) or a user's phone number. The USIM information may include personal information for providing various services, such as subscriber identification, authentication, charging, security functions, etc.

The profile provider 429 may perform packaging on the UICC information in the form of a profile, and may deliver the profile to the profile manager 427 by encrypting the profile. The profile manager 427 may receive the providing request from at least one of the external devices 420.

The profile manager 427 may install the encrypted data, which is received from the profile provider 429, in the profile 419. The profile manager 427 may form a security domain, which is an encrypted connection, with the security module 417 based on the encrypted packaging received from the profile provider 429.

An Over The Air (OTA) scheme may be used to install the profile. For example, a process of installing the profile may include at least two steps, such as an installation phase and an operational phase.

The installation phase may include a process in which the electronic device 401 downloads the profile 419 from the profile manager 427 and installs the profile. In the operational phase, the installed profile may first be configured in a disabled state, and thereafter, may be configured as an enabled state by the profile manager 427.

The profile may include a plurality of profiles, which may be installed or managed by different vendors (e.g., the MNO 425) via different profile managers (e.g., the profile manager 427). The profile manager 427 and the profile provider 429 may be included in the MNO 425, the TSM 421, and a server operated by an electronic device manufacturer or a security module manufacturer.

The account manager 433 manages and authenticates user account information. For example, the account manager 433 stores the user's account information (e.g., security information or the like such as an ID, a password, user information of the ID, and financial information), and thus, may authenticate that the user when the electronic device 401 receives an ID and password input from the user and transmits the ID and the password to the financial system 420.

The account manager 433 may share or deliver the user's authentication information (e.g., an indication as to whether or not the authentication is successful) to a different external device. For example, the user may input account information (e.g., an account ID and a password) via the electronic device 401 or the external information acquisition module 441.

The account manager 433 may authenticate that the user is an account owner by comparing account information acquired from the user with account information that is pre-stored in the account manager 433. The account manager 433 may additionally authenticate a user who sends the account information by resending authentication information, which is in regards to the account information acquired from the user, to the electronic device 401 or by delivering the authentication information to a different external device, such as the TSM 421. The account manager 433 may include an external security database for storing account information owned by the account manager 433. The database may restrict access for an object not having a special right for the security.

The POS 431 may perform a payment by receiving financial information. For example, the POS 431 may perform the payment by using the financial information received from the electronic device 401. The POS 431 may send the financial information to a different external device (e.g., the financial system 420 or a payment server) to perform the payment.

The POS 431 may have a payment function in the form of a module or a server, and may include a payment terminal (e.g., a credit card payment machine, an NFC payment machine, etc.) in the form of an electronic device.

All or at least one part of constitutional elements of the financial system 420 may be connected through a server network.

At least one part of the information acquisition module 403, the profile management module 405, the registration module 409, and/or the usage module 411 may be implemented as at least one part of a processor in software or firmware, or may be directly implemented in hardware.

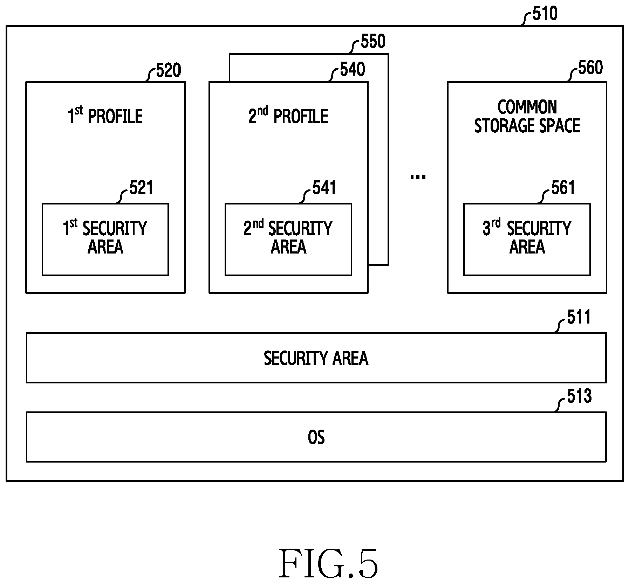

FIG. 5 illustrates a security module according to an embodiment of the present disclosure. For example, the security module 510 may be substituted for the security module 417 illustrated in FIG. 4.

Referring to FIG. 5, the security module 510 may store and manage security information (e.g., user information, financial information, bio information, etc.) for a user of an electronic device. The security module 510 includes at least one profile (e.g., a first profile 520, a second profile 540, a third profile 550, etc.), a common storage space 560, a security area 511 (e.g., an area additionally requiring an access right for storing and using information), and an OS 513. Although FIG. 5 illustrates three profiles, by way of example, the present embodiment is not limited thereto.

The first profile 520, the second profile 540, and the 3^{rd} profile 550 store subscription information, user information, etc., for using a network service for each vendor providing a wireless network. For example, the first profile 520 stores and uses subscription information of a first vendor and the second profile 540 stores and uses subscription information of a second vendor.

The security module 510 may be built-in, mounted, or embedded in an electronic device , as a non-detachable UICC (e.g., an embedded UICC (eUICC), an embedded SIM (eSIM), etc.

The profiles 520, 540, and 550 may be managed (e.g., installed, deleted, stored, or modified) via a first external device. For example, a first external device, such as the MNO 425 illustrated in FIG. 4, may store a variety of information for using a network service provided by a vender, such as user information, vendor information, service usage agreement information, etc., in the at least one profile according to an agreement with the user.

The first external device may also install, delete, store, or modify the profile in the first profile 520 via a second external device, such as the profile manager 427 or the profile provider 429 illustrated in FIG. 4.

The first profile 520 and the second profile 540 include a first security area 521 and a second security area 541. Although not illustrated in FIG. 5, the third profile 550 (and any other profiles) may also include a security area.

Additionally, the common storage space 560 includes a third security area 561.

The electronic device may restrict access to the security area 511, the first security area 521, the second security area 541, and/or the third security area 561 (e.g., an access by an external device, a different electronic device, or an internal application) so as to be used to store and use information requiring security such as personal information, a certificate, etc.

The common stage portion 560 stores common information of the profiles 520, 540, and 550. Accordingly, instead of storing security information for each of the profiles 520, 540, and 550 in their respective security areas, the electronic device may store security information (e.g., financial information) the third security area 561, so that the security information can be used while at least one of the profiles 520, 540, and 550 is currently being used. The electronic device may use the entirety of the common storage space 560 as the third security area 561.

The security module 510 may include an eUICC Certificate Authority Security Domain (ECASD) in the security area 511. The ECASD is an area defined in an inner portion of the security module 510 in a process of producing the security module 510 (e.g., eUICC), and may include security information that cannot be modified after creation, such as a unique private key, a certificate, a keyset of a manufacturer of the security module 510, etc.

The OS 513 may exchange and manage information between respective parts (e.g., the profiles 520, 540, and 550, the OS 513, the security area 511, etc.) in an inner portion of the security module 510, or may act as an interface for communication outside of the security module 510.

The security module 510 may include a specific storage space, which stores instructions for managing the security module 510, a file system of the security module, a provider of a secured OTA (e.g., a security domain) for forming a secured OTA channel, a policy rule between the security module 510 and external devices, etc. The security module 510 may process at least one part of information acquired from different elements of the electronic device, and may provide this to a user in various manners. For example, the security module 510 may be configured independently or by using a processor.

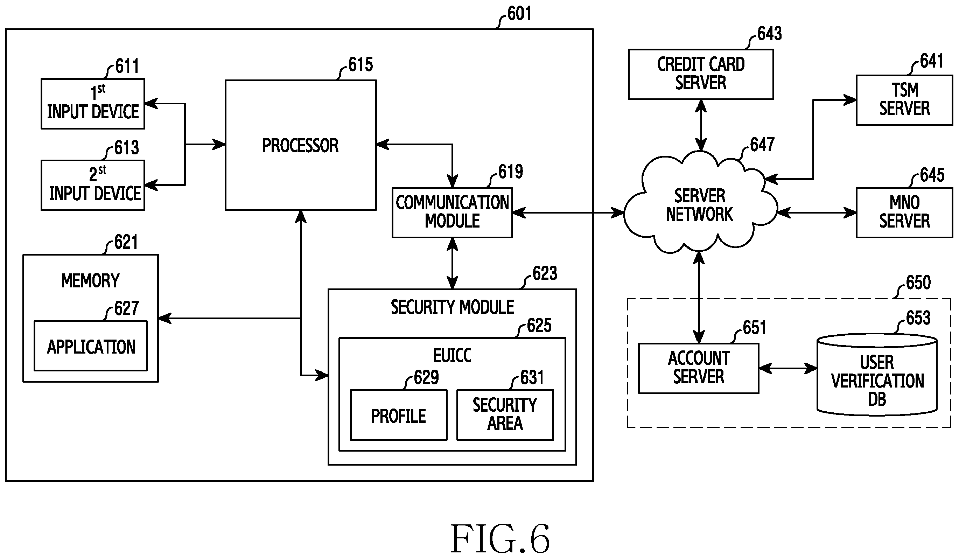

FIG. 6 illustrates an example of a financial environment for an electronic device according to an embodiment of the present disclosure.

Referring to FIG. 6, in the financial environment, an electronic device 601 is connected to a credit card server 643, a TSM server 641, an MNO server 645, and an account system 650 via a server network 647.

Further, the electronic device 601 includes a first input device 611, a second input device 613, a processor 615, a communication module 619, a memory 621, and a security module 623. The first input device 611 and the second input device 613 may include at least one of various input devices (similar to the input device 250, the sensor module 240, the audio module 280, etc., as described above). Although FIG. 6 illustrates the electronic device 601 as having two input devices, the electronic device 601 may include more input devices.

The electronic device 601 may use at least one piece of information acquired via the first input device 611 and/or the second input device 613 in user authentication. For example, the electronic device 601 may authenticate a user by using fingerprint information acquired from the first input device 611 and user face information acquired from the second input device 613. The electronic device 601 may authenticate the user by using only the fingerprint information, by using only the face information, or by using both of the fingerprint information and the face information. Additionally, methods of authentication are not limited to using fingerprint information and the face information, e.g., one or more different types of bio information (e.g., iris information, voice information, pulse information, etc.) may be used in the user authentication.

The security module 623 may be separately mounted, for example, on a PCB, and thus, may be accessible only when an additional access right is given. The security module 623 may be used by interworking with an application 627 stored in the memory 621 (or alternatively, in the processor 615), or may be used by being connected with the credit card vendor server 643 or the MNO server 645, via the communication module 619.

The security module 623 includes an EUICC 625, which includes a profile 629 and a security area 631. As described above, the security module 623 may store financial information associated with a user of the electronic device 601 or user information associated with the financial information.

The processor 615 may operate similarly to the processor 210, as described above with reference to FIG. 2.

The server network 647 connects the electronic device 601 with the credit card server 643, the TSM server 641, the MNO server 645, and the account management system 650. The TSM server 641, the MNO server 645, and the account management system 650 operate similarly to the TSM 421, the MNO 425, and the account manager 433, as described above with reference to FIG. 4.

The credit card server 643, which may be operated by at least one service provider, may pre-store user credit card information (e.g., a credit card number, an expiration date, a unique identity number, etc.) in association with user information, and transmit at least one part of pre-stored information to a payment server according to a request (e.g., payment request information, a user's payment request input, etc.).

The account system 650 includes an account server 651 and a user verification database (DB) 653. The account system 650 may generate, delete, or maintain an account (e.g., a network subscription account, etc.) owned by the user of the electronic device 601 to use various services. The account server 651 interworks with a different device via the server network 647, and the user verification DB 653 stores user information related to an account.

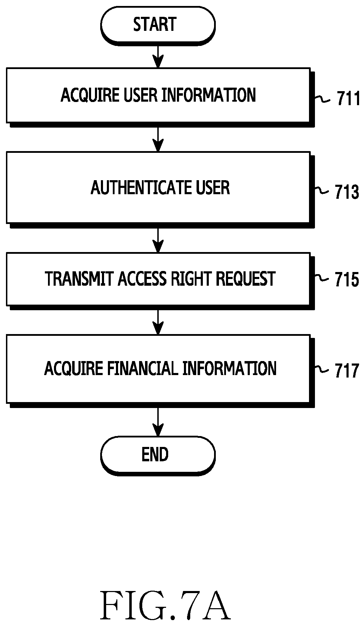

FIG. 7A is a flowchart illustrating an operation of inputting financial information according to an embodiment of the present disclosure.

Referring to FIG. 7A, in step 711, an electronic device acquires user information via an input device operatively coupled to the electronic device. For example, the user information may include a user's personal information, account information, bio information, or at least one piece of financial information related to the user.

For example, in step 711, the electronic device may acquire account information (e.g., an ID or a password) from the user through a display, or may acquire bio information (e.g., iris information, face information, fingerprint information, pulse information, DNA information, etc.) of the user through a sensor module.

In step 713, the electronic device authenticates the user based on the information acquired in step 711. For example, the electronic device may directly authenticate the user based on the user information acquired in step 711 or may authenticate the user through an external device. For example, the electronic device may transmit the user information to an external device in order for the external device to perform a user authentication operation based on the transmitted user information. The electronic device may acquire a result of user authentication performed by the external device.

In step 715, the electronic device transmits an access right request. For example, in order for a first external device (e.g., the service provider 423 as illustrated in FIG. 4) to access a security module to which access is restricted, a special right is required. The special right may not always be included in the first external device.

Accordingly, if the first external device requires an access right to access the security module of the electronic device, the electronic device may request the second external device to provide the access right to the first external device. The first external device may then acquire, from the second external device (e.g., the TSM 421), a temporary access right to temporarily access the security module based on the right request.

In step 717, the electronic device acquires financial information. For example, the electronic device may acquire financial information corresponding to an authenticated user from the external device that acquired the access right. The financial information may include credit card information input by the authenticated user, account information, bank account information, financial information corresponding to the account information, financial information stored in the external device, etc.

In step 717, the electronic device may receive financial information directly input by the user, and the electronic device may deliver the financial information to the first external device in order to input the information to the security module. For example, if the electronic device does not have an access right for the security module or if the access right cannot be given to the electronic device for security reasons, the electronic device may deliver the financial information to the first external device in order for the first external device to input the information to the security module.

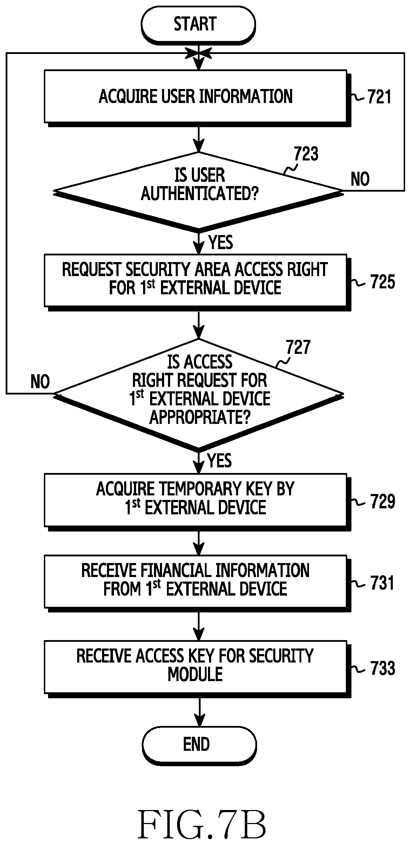

FIG. 7B is a flowchart illustrating an operation of inputting financial information according to an embodiment of the present disclosure.

Referring to FIG. 7B, in step 721, an electronic device acquires user information from a user.

In step 723, the electronic device determines whether or not the user is authenticated, based on the acquired user information. For example, the electronic device may perform authentication itself or may deliver the user information to a second external device, which determines whether or not the user is authenticated.

For example, the electronic device may authenticate the user by comparing user information stored in the security module (e.g., the security module 510) and the acquired user input.

If the user authentication fails in step 723, the electronic device may perform step 721 again. However, if the user authentication is successful in step 723, the electronic device transmits, to a second external device, an access right request for allowing a first external device to access a security module of the electronic device, based on the user authentication, in step 725. For example, the electronic device may request the TSM 421, as illustrated in FIG. 4, to provide an access right to the service provider 423.

In step 727, the second external device determines whether the request is appropriate for the first external device. For example, the TSM 421 may determine whether the service provider 423 is an appropriate service provider registered in the TSM 421 or whether the user is a normal user (e.g., whether it is reported as a stolen account or whether user authentication is complete by a reliable entity).

In step 729, the first external device acquires a temporary key from the second external device, based on the result of step 727. For example, the temporary key may be a restricted temporary access right to access only one part of the security module.

In step 731, the electronic device receives financial information input to the security module of the electronic device from the first external device. For example, the electronic device may allow the first external device to input financial information (e.g., financial information such as a credit card number, an expiration data, a credit verification code (CVC) number, etc.) to a security module included in the electronic device based on the temporary key acquired by the first external device.

The financial information may be delivered from the electronic device to the first external device or financial information stored in the first external device. For example, the financial information may be an account or password input by a user or credit card information (e.g., a credit card number, an expiration date, etc.), or may be financial information stored in a database (e.g., a security database) of the first external device (e.g., a TSM, an account manager, or a service provider) in association with the user information.

In step 733, the electronic device receives an access key from the first external device. For example, the electronic device may receive a payment right for accessing stored financial information, when a request for an electronic payment is received via the electronic device.

The electronic device may receive a payment key input from the first external device when the first external device (e.g., the service provider 423) accesses the security module by using the temporary key. For example, the temporary key may be a temporary access right for allowing the first external device to temporarily access the security module (e.g., to input information) at the request of the electronic device.

The first external device may require an access right for using the financial information when there is a user payment request. For example, the first external device may require a payment right for performing a payment corresponding to the payment request via a payment server by using the financial information. The electronic device may receive the payment right (e.g., the payment key) with financial information, when the first external device accesses the security module of the electronic device by using the temporary key.

Upon receiving the payment request, the electronic device may allow the first external device to access the security module by using the payment right.

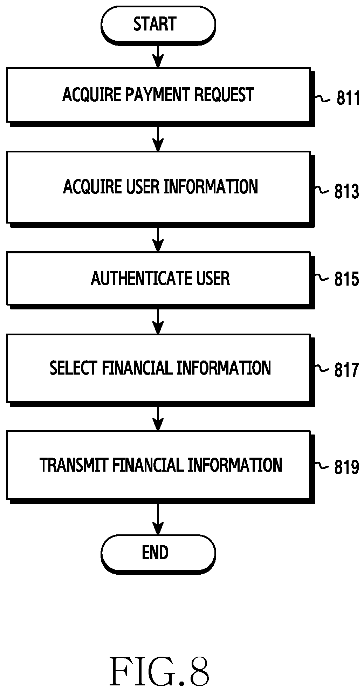

FIG. 8 is a flowchart illustrating an operation of using financial information according to an embodiment of the present disclosure.

Referring to FIG. 8, in step 811, an electronic device acquires a payment request to make a payment for a product or a service. For example, the electronic device may receive payment information (e.g., a price, a payment place, a payment method, a product type, a product category, a product name, etc.) of the product by using information (e.g., an RFID, an NFC tag, product information, an image of the product itself, a barcode, etc.) attached or displayed in the product to be purchased or information (e.g., information acquired through a beacon) provided by a shop. For example, the electronic device may recognize a barcode of the product by using a camera to confirm payment information of the product or to receive a payment request.

The electronic device may receive product information over the Internet via a server (e.g., URL, HTTP, TCP, etc.) including the payment information and may process the received information as the payment request. When being logged in with an account of a user, the electronic device may receive a payment request for the account from a service provider who provides the account.

In step 813, the electronic device acquires user information for authentication of the user to perform the payment corresponding to the payment request. For example, the electronic device may acquire the user information via various input devices operatively coupled to the electronic device.

The electronic device may acquire the user information via the display (e.g., a touch screen). For example, the electronic device may acquire the user's account information, a Personal Identification Number (PIN) number, an answer to a question for checking a user, etc., via the display.

The electronic device may acquire the user information via a camera module or a sensor module. For example, the electronic device may acquire bio information such as an iris, a fingerprint, a heart rate, a blood flow rate, etc.

The electronic device may acquire the user information via an audio module. For example, the electronic device may acquire a user's voice as the user information via the audio module.

The electronic device may acquire the user information via the communication module. For example, the electronic device may acquire the user information from a different electronic device communicating with the electronic device via the communication module.

The user information acquired by the electronic device from the different electronic device may be user information acquired via various input devices of the different electronic device. For example, the user information may include bio information, account information, etc., acquired from the different electronic device.

In step 815, the electronic device authenticates the user by using the user information acquired in step 813. As described above, the electronic device may authenticate the user itself or via a second external device.

The electronic device may authenticate the user by comparing the acquired user information with information stored in a security module of the electronic device. For example, the electronic device may receive a PIN number from the user and compare it with a PIN number stored in the electronic device to authenticate the user.

The electronic device may authenticate the user via a second external device. For example, the electronic device may transmit the acquired user information to an account manager, which will compare it with user information pre-stored in the account manager and report a result of the comparison to the electronic device.

The stored user information may be acquired and stored from a user when the user first registers an account or registers for a service..

In step 817, the electronic device selects financial information to be used in the payment, in response to the payment request received in step 811. For example, the electronic device may receive a user input, or may select financial information for performing a payment among at least one piece of financial information included in the security module by a determination of a processor. The electronic device may include at least one piece of financial information in some portions of the security module.

The electronic device may include different pieces of financial information for each profile of the security module. For example, a first profile may include at least financial information related to an MNO A, and a second profile may include financial information related to an MNO B.

The first profile and the second profile may include one or more pieces of financial information. For example, the first profile may further include financial information related to the MNO A and financial information related to an external device C (e.g., the service provider, the account manager, etc.)

The electronic device may provide an interface to a user via a display or a different output device, in order for the user to select the financial information included in the security module. For example, the electronic device may provide the user with all of the financial information included in the electronic device via the display, in order for the user to select financial information therefrom.

In step 819, the electronic device transmits the financial information selected in step 817 to an external device (e.g., a payment server, the TSM 421, or POS 431 of FIG. 4) in various manners. For example, the selected financial information may be transmitted to the external device via a network, an NFC tag, Wi-Fi Direct, Bluetooth communication, IrDA, etc. The external device may perform the payment by transmitting the transmitted financial information to the payment server or the account manager.

Although the electronic device first authenticates the user and selects financial information for the user in FIG. 8, it is also possible that the electronic device first selects the financial information, and then a user input corresponding to the financial information is requested to authenticate the user.

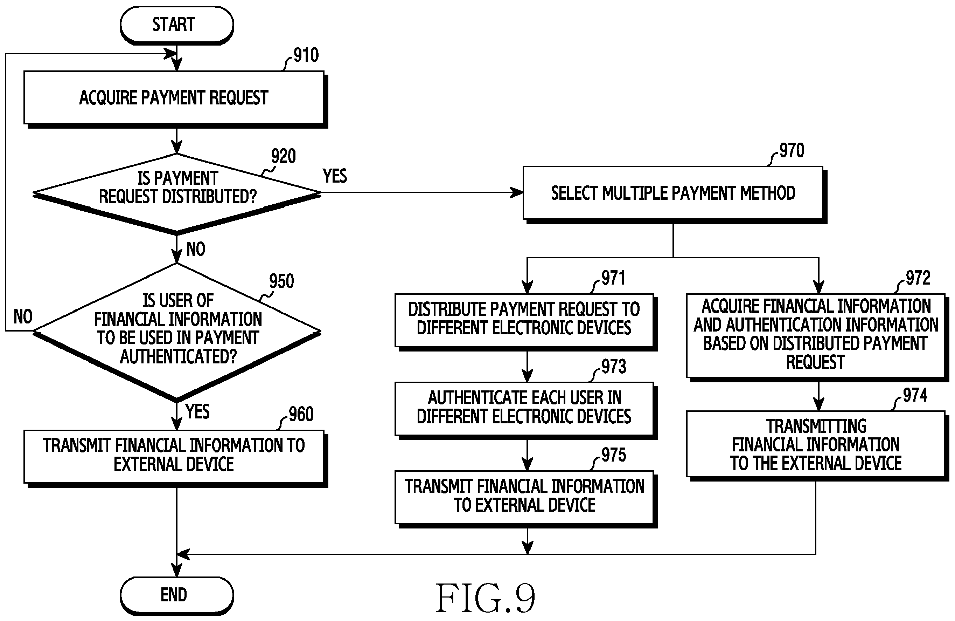

FIG. 9 is a flowchart illustrating an operation of using financial information according to an embodiment of the present disclosure. Specifically, FIG. 9 illustrates an operation of using the financial information to perform a multiple payment operation.

Referring to FIG. 9, in step 910, the electronic device acquires payment request.

In step 920, the electronic device determines whether the payment request is for a distributed payment. For example, if the user desires to perform a payment together with another person, the user or the electronic device may determine a specific criterion according to which the payment request is to be divided.

The user or the electronic device may distribute the payment request to an external electronic device. For example, when the user performs a payment after finishing a meal at a restaurant, a payment request for charging a total price of food served to all of the people accompanying the user may be received from the electronic device, and thereafter, the payment request may be distributed to different electronic devices of the other people by using various methods. For example, the user may distribute the payment request to the external electronic devices for different menu items ordered at the table, or may distribute payment based on price, e.g., each diner pays an equal portion of the total bill.

If the payment is to be distributed in step 920, in step 970, the electronic device selects a method of performing the payment. The user or the electronic device may allow the different electronic devices to perform a payment for the distributed payment request. The user or the electronic device may receive a profile or financial information corresponding to the payment request from the different electronic device.

In step 971, the external electronic device distributes the payment request to the different electronic devices.

In step 973, the different electronic devices authenticate a user of the financial information corresponding to the payment request, and in step 975, transmit the financial information to the external device to perform the payment.

Step 973 may be previously performed by the electronic device, before the payment request is distributed to the different electronic devices in step 971. For example, the electronic device may receive the payment request distributed from a user of the different electronic device after completing the aforementioned operations 815 and 817 of FIG. 8. The electronic device may not transmit the financial information, if the user authentication is not properly achieved.

Alternatively, in step 972, the electronic device acquires, from an external device, profile or financial information corresponding to the distributed payment request. In step 974, the electronic device transmits the profile or financial information to the external device.

In step 972, the electronic device may additionally acquire user authentication information for the financial information. The authentication information may include a user's authentication result corresponding to financial information of the external electronic device. The external electronic device may not transmit the financial information, if the user authentication is not properly achieved.

In step 950, the electronic device determines if the user is authenticated. If the user is authenticated, the electronic device transmits the financial information to an external electronic device in step 960.

In step 950, if the user authentication is achieved but is not matched with the user of the financial information, the electronic device may select the user's financial information as financial information to be used for the payment.

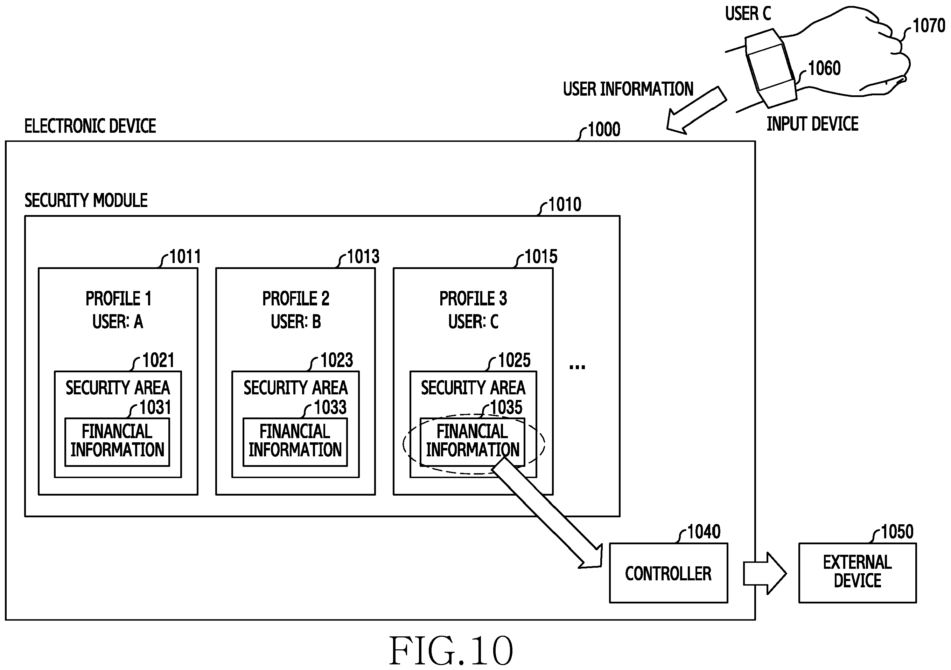

FIG. 10 illustrates an example of making a payment using an electronic device according to an embodiment of the present disclosure.

Referring to FIG. 10, an electronic device 1000 may acquire user information from an input device 1060 worn by a user 1070operatively coupled to the electronic device 1000, and perform a payment in response to a payment request by using financial information corresponding to the user information. For example, the input device 1060 may include various input devices, e.g., as illustrated in FIG. 2.

The electronic device 1000 may authenticate and confirm a user corresponding to the acquired user information. For example, the electronic device 1000 may acquire bio information of a user from the input device 1060 and may confirm the user corresponding to the bio information. For example, when a user who wears the input device 1060 is C, the electronic device may acquire bio information of the user C and compare it with at least one piece of user information to confirm the user C.

The electronic device 1000 may deliver the user information to an external device 1050 and receive an authentication result to determine the user. For example, the electronic device may deliver the bio information to the external device 1050 for integrally managing bio information of a plurality of users, and thus, may acquire information on an authentication of the user from the external device 1050.

The electronic device 1000 may select financial information corresponding to the authenticated user. For example, a security module 1010 of the electronic device 1000 includes a first profile 1011, a second profile 1013, and a third profile 1015, which may be registered through an agreement of different users with respect to different network providers. For example, a user A is registered in the first profile 1011, a user B is registered in the second profile 1013, and a user C is registered in the third profile 1015. The profiles 1011, 1013, and 1015 may be for the same network provider or different network providers.

If the user A is confirmed by the electronic device 1000 or the external device 1050, the electronic device 1000 may select financial information 1031 existing in a security area 1021 of the first profile 1011 as financial information corresponding to a payment request.

If the user B is confirmed by the electronic device 1000 or the external device 1050, the electronic device 1000 may select financial information 1033 existing in a security area 1023 of the second profile 1013 as financial information corresponding to a payment request.

If the user C is confirmed by the electronic device 1000 or the external device 1050, the electronic device 1000 may select financial information 1035 existing in a security area 1025 of the third profile 1015 as financial information corresponding to a payment request. The electronic device 1000 may transmit the financial information to the external device 1050 (e.g., the TSM, the POS, etc.) via a controller 1040 (e.g., a communication module) to perform the payment.

The electronic device 1000 may transmit the user information or an authentication result based on the user information (e.g., a result authenticated via the electronic device) to the external device 1050, so that the external device 1050 authenticates or confirms the user and so that the external device 1050 accesses a profile corresponding to the user to acquire the financial information, thereby being able to perform the payment.

The electronic device 1000 may transmit the financial information 1035 based on a connection state between the input device 1060 and the electronic device 1000. For example, the electronic device 1000 may postpone the transmission of the financial information 1035 to the external device 1050, if there is a possibility of a security problem, e.g., when a connection between the input device 1060 and the electronic device 1000 is unreliable, or when a connection is disconnected and is then connected again during a user authentication.

In the above case, the electronic device 1000 may request the input device 1060 to re-acquire the user information, or re-perform the user authentication operation.

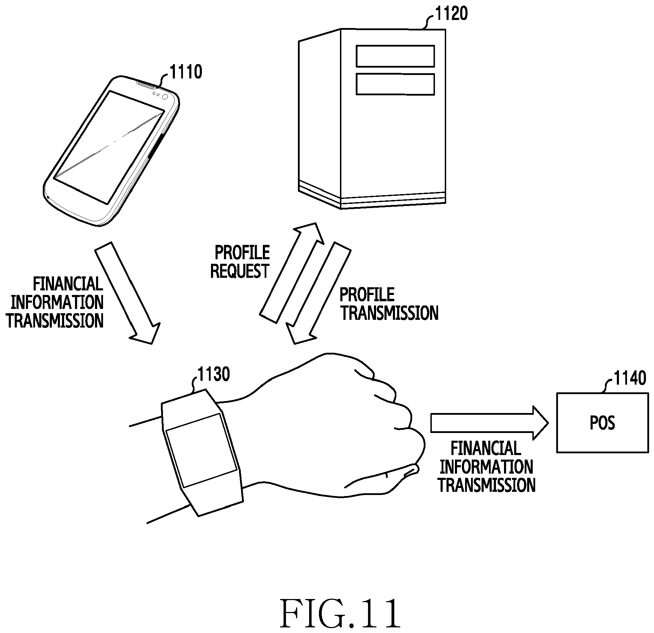

FIG. 11 illustrates an example of making a payment using an electronic device according to an embodiment of the present disclosure.

Referring to FIG. 11, an electronic device 1110 or an external device 1120 may deliver a profile (e.g., a profile of a security module) or financial information to a different electronic device 1130 to allow the different electronic device 1130 to perform a payment. For example, the different electronic device 1130 may receive the profile or financial information received from the electronic device 1110 or the external device 1120 to perform a payment via a POS 1140.

The different electronic device 1130 may request the electronic device 1110 or the external device 1120 to transmit a profile. For example, the different electronic device 1130 may receive user information via an input device to authenticate the user. For example, the different electronic device 1130 may authenticate the user via the different electronic device 1130, the electronic device 1110, or the external device 1120. The different electronic device 1130 may request the electronic device 1110 or the external device 1120 to transmit financial information or a profile corresponding to the user based on the user authentication.

The electronic device 1110 or the external device 1120 may transmit the profile or the financial information to the different electronic device 1130 based on the request of the different electronic device 1130. In order to avoid a security problem, the profile or the financial information may be transmitted by being encapsulated to be used only one time in a payment, or only minimum information required in the payment can be included.

If the payment request is received, the electronic device 1110 may transmit, in advance, the financial information to the different electronic device 1130 in accordance with various surrounding environments. For example, if the payment request is received, for a convenient payment, the electronic device 1110 may transmit the financial information without a user's request, based on the type of a payment requesting terminal (e.g., the POS 1140), a connection state with the different electronic device 1130 currently being connected, a compatibility state between the different electronic device 1130 and the payment requesting terminal, and/or information of a current user of the different electronic device 1130.

The POS 1140 may perform the payment by receiving the financial information from the different electronic device 1130. For example, the POS 1140 may perform the payment by transmitting the financial information to a payment server.

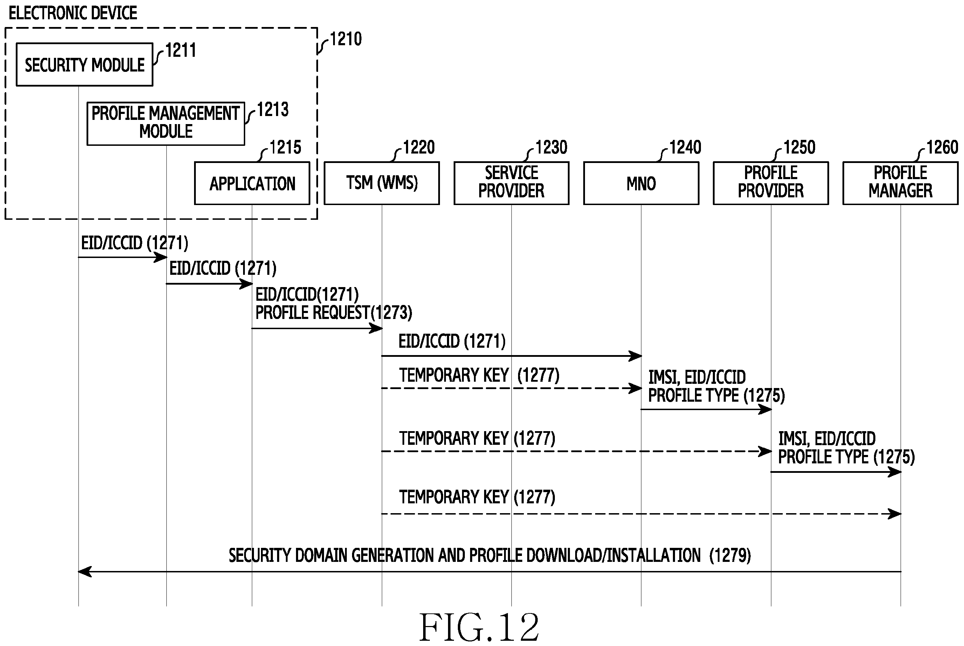

FIG. 12 is a signal flow diagram illustrating a method of installing a profile in an electronic device according to an embodiment of the present disclosure.

Referring to FIG. 12, an electronic device 1210 may use a network provided from an external device through an agreement with the external device (e.g., an MNO 1240). In order to use the network, the electronic device 1210 may install a profile including information (e.g., IMSI or ID (EID/ICCID) of the electronic device 1210, etc.) related to the agreement with the external device, network information, subscriber authentication information (e.g., user information, or bio information of the user), charging information, a security function, etc.

The electronic device 1210 may request to install the profile by transmitting an EID/ICCID 1271 of the electronic device 1210 to the MNO 1240..

More specifically, a security module 1211 of the electronic device transmits the EID/ICCID 1271 to a profile management module 1213, which forwards the EID/ICCID 1271 to an application 1215.

The application 1215 then delivers the EID/ICCID 1271 and profile request 1273 to a TSM 1220 to request the installation of the profile.

In response to the profile installation request 1273, the TSM 1220 delivers the EID/ICCID 1271 to the MNO 1240.

Additionally, the TSM 1220 delivers a temporary key 1277 for accessing the electronic device 1210 (e.g., the security module 1211) via a service provider 1230.

Upon receiving the EID/ICCID 1271 and the temporary key 1277, the MNO 1240 delivers an IMSI (i.e., subscriber identification number), an EID/ICCID, profile type information 1275, and the temporary key 1277 to a profile provider 1250, which provides a profile manager 1260 with UICC information (e.g., the IMSI, the EID/ICCID, the profile type 1275, etc.) delivered from the MNO 1240 by performing packaging and encrypting according to a profile type.

Alternatively, the TSM 1220 may deliver the temporary key 1277 to at least one of the profile provider 1250 and the profile manager 1260, via the service provider 1230

The profile manager 1260 may deliver the profile 1279 to the electronic device 1210. For example, the profile manager 1260 may generate a security domain (e.g., a secured OTA) which may be predetermined by using an OTA scheme, and may download and install the profile 1279 to the electronic device 1210 through the secured OTA.

For example, the electronic device 1210 may include security domain information for connecting with the profile manager 1260 in advance (e.g., in a security module 1211), or may include security domain information acquired when a network usage registration (e.g., subscription, agreement, etc.) is performed with respect to the MNO 1240. The electronic device 1210 may request the profile manager 1260 to directly provide a profile on the basis of included security domain information, so that the profile is installed from the profile manager 1260.

The electronic device 1210 may re-install at least one profile included in the security module 1211 of the electronic device 1210 as another profile. For example, the electronic device 1210 may re-install the profile in association with the TSM 1220, the MNO 1240, the profile provider 1250, and the profile manager 1260.

For example, if financial information regarding a user authenticated through a user input which is input from the input device is included not in an enabled profile, but in a disabled profile at present, the electronic device 1210 may temporarily re-install the disabled profile instead of the enabled profile in order to use the financial information. In this case, the electronic device 1210 may re-install the profile via the TSM 1220, the MNO 1240, the profile provider 1250, and the profile manager 1260.

According to the various embodiments as described above, at least some of the devices (for example, modules or functions thereof) or the method (for example, operations) according to the present disclosure may be implemented by a command stored in a computer-readable storage medium in a programming module form. The instruction, when executed by a processor, may cause the one or more processors to execute the function corresponding to the instruction. The computer-readable storage medium may be, for example, a memory.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added. Further, the embodiments disclosed in this document are only for the description and understanding of technical contents and do not limit the scope of the present disclosure. Accordingly, the scope of the present disclosure should be construed as including all modifications or various other embodiments based on the technical idea of the present disclosure.

While the present invention has been particularly shown and described with reference to certain embodiments thereof, it will be understood by those of ordinary skill in the art that various changes in form and details may be made therein without departing from the scope of the present invention as defined by the following claims and their equivalents.

## Claims

1. A method for storing financial information in an electronic device (401, 601), the method comprising:
acquiring (711) user information related to a user of the electronic device;
authenticating (713) the user based on the acquired user information;
transmitting (715), to a second external device (421, 641), a request for granting an access right for accessing one of at least one profile (419, 520, 540, 550, 629) to store financial information within the profile in a security module (417, 510, 623) included in the electronic device by a first external device (423), based on the authentication of the user, wherein the at least one profile stores at least one subscription information for using a network service, and the at least one profile includes a security area (521, 541);
receiving (717) financial information for the user from the first external device, based on the access right being granted from the second external device to the first external device; and
storing the received financial information to a security area of the profile included in the security module by accessing to the security area of the profile included in the security module with the access right being granted by the second external device,
wherein the security module is embedded in an embedded Universal Integrated Circuit Card, e-UICC, in the electronic device.

2. The method of claim 1, wherein acquiring (711) the user information comprises acquiring the user information via or from an input device (250, 611, 613, 1060) operatively coupled to the electronic device.

3. The method of claim 1, wherein acquiring (711) user information comprises acquiring at least one of user bio information, user account information, a user certificate, information of the electronic device, information of a different electronic device operatively coupled to the electronic device, and a profile of the different electronic device.

4. The method of claim 1, wherein the access right is received by the first external device, from the second external device.

5. The method of claim 1, wherein the financial information is acquired via an input device included in the electronic device and is transmitted to the first external device.

6. An electronic device (401, 601) for storing financial information comprising:
a security module (417, 510, 623); and
a processor (615) configured to:
acquire (711) user information related to a user of the electronic device;
authenticate (713) the user based on the acquired user information;
transmit (715), to a second external device (421, 641), a request for granting an access right for accessing one of at least one profile (419, 520, 540, 550, 629) to store financial information within the profile in a security module included in the electronic device by a first external device (423), based on the authentication of the user, wherein the at least one profile stores at least one subscription information for using a network service, and each profile includes a security area (521, 541);
receive (717) financial information for the user from the first external device, based on the access right being granted from the second external device to the first external device; and
store the received financial information to a security area in the security module by accessing the security area in the security module with the access right being granted from the second external device,
wherein the security module is embedded in an embedded Universal Integrated Circuit Card, e-UICC, in the electronic device.

7. The electronic device of claim 6, wherein the processor is further configured to acquire the user information via or from an input device (250, 611, 613, 1060) operatively coupled to the electronic device.

8. The electronic device of claim 6, wherein the security module comprises at least one common storage space for storing at least one profile or common information for storing vendor specific subscriber identity information.

9. The electronic device of claim 6, wherein the security module comprises multiple security areas, wherein each of the multiple security areas (631) is included in each of the multiple profiles.

10. The electronic device of claim 6, wherein the processor is further configured to:
transmit, to a third external device, an installation request for determining whether to install a profile;
if it is determined to install the profile, connect a security domain between the third electronic device and the security module; and
download a new profile through the security domain.

11. The electronic device of claim 6 wherein the processor is further configured to:
receive a payment request to perform an electronic payment;
select financial information for performing the electronic payment, from among one or more pieces of financial information stored on the security module, based on the payment request;
acquire a user input for authenticating the selected financial information; and
if the selected financial information is authenticated based on the user input, transmit the selected financial information to the first external device.

12. The electronic device of claim 11, wherein the processor is further configured to transmit a request to a different electronic device for requesting at least one part of a price associated with the electronic payment to be paid through the different electronic device.

13. The electronic device of claim 11, wherein the processor is further configured to confirm the electronic payment through a camera image, voice recognition, or communication.
